# EUROPEAN PATENT SPECIFICATION

(11) **EP 1 881 247 B1**
(45) Date of publication and mention of the grant of the patent: **07.04.2010**
(21) Application number: 07013785.6
(22) Date of filing: 13.07.2007
(51) Int. Cl.: F16K 11/087

(54) **Manifold for liquid or gas distribution systems, with reduced overall size**
Verteiler für Flüssigkeits- oder Gasverteilungssysteme mit reduzierter Baugröße
Collecteur pour des systèmes de distribution de liquide ou de gaz, avec une réduction de la taille globale

(30) Priority: 20.07.2006 IT MI20061416
(43) Date of publication of application: 23.01.2008
(73) Proprietor: Colombo, Renato, 28021 Borgomanero (Novara) (IT)
(72) Inventor: Colombo, Renato, 28021 Borgomanero (Novara) (IT)
(74) Representative: Alagem Modiano, Lara S.

(56) References cited:
- DE-A1- 19 716 193
- FR-A- 2 231 272
- US-A1- 2003 121 274

## Description

The present invention relates to a manifold for liquid or gas distribution systems, with reduced overall size.

Manifolds for liquid or gas distribution systems are known which are constituted generally by a substantially cylindrical hollow body which has an intake port at an axial end thereof and, on its lateral surface, two or more discharge ports which are arranged at corresponding lateral branches of the manifold body.

In manifolds of this kind, when it is necessary to be able to interrupt the delivery of the fluid through all the discharge ports, a flow control valve is generally provided which is connected by means of its outlet, for example by way of a threaded coupling, to the axial end of the body of the manifold at which the intake port is provided.

These manifolds suffer the drawback of requiring, during installation, the execution of the connection of the flow control valve to the manifold body, causing an increase in overall installation times.

Moreover, the presence of the flow control valve increases significantly the overall size of the manifold.

In order to obviate these drawbacks, manifolds have been devised in which the flow control valve is integrated in the manifold body and is arranged between the intake port and the first discharge port, i.e., the discharge port that lies closest to the intake port.

Although this solution reduces the time required to install the manifold, it still suffers the drawback of requiring an additional space occupation between the intake port and the first discharge port in order to be able to accommodate the flow control element of the flow control valve, and therefore does not allow to push the reduction of the axial dimensions of the manifold beyond a certain limit.

US2003/0121274 discloses a vapor compression system with a ball-shaped flow control system provided with a plurality of holes.

The aim of the present invention is to provide a manifold for gas or liquid distribution systems which can have a reduced size even with respect to conventional manifolds in which the flow control valve is integrated in the manifold.

Within this aim, an object of the invention is to provide a manifold in which the distance between the intake port and the first discharge port, i.e., the discharge port which, among the discharge ports, lies closest to the intake port, can be particularly short.

Another object of the invention is to provide a manifold which can be installed extremely simply and rapidly.

Another object of the invention is to provide a manifold which can be produced at competitive costs.

Still another object of the invention is to provide a manifold which offers adequate assurances of tightness and safety.

This aim and these and other objects, which will become better apparent hereinafter, are achieved by a manifold for liquid or gas distribution systems, as defined in claim 1.

Further characteristics and advantages of the present invention will become better apparent from the description of some preferred but not exclusive embodiments of the manifold according to the invention, illustrated by way of non-limiting example in the accompanying drawings, wherein:
Figures 1 to 5 are views of the manifold according to the invention in a first embodiment, and more particularly:
   Figure 1 is a top plan view of the manifold with the flow control element in the open position;
   Figure 2 is a sectional view of Figure 1, taken along the line II-II;
   Figure 3 is a sectional view of a detail of Figure 2, taken along the line III-III;
   Figure 4 is a sectional view, similar to Figure 2, but with the flow control element in the closed position;
   Figure 5 is a sectional view of a detail of Figure 4, taken along the line V-V;
   Figures 6 to 12 are views of the manifold according to the invention in a second embodiment, and more particularly:

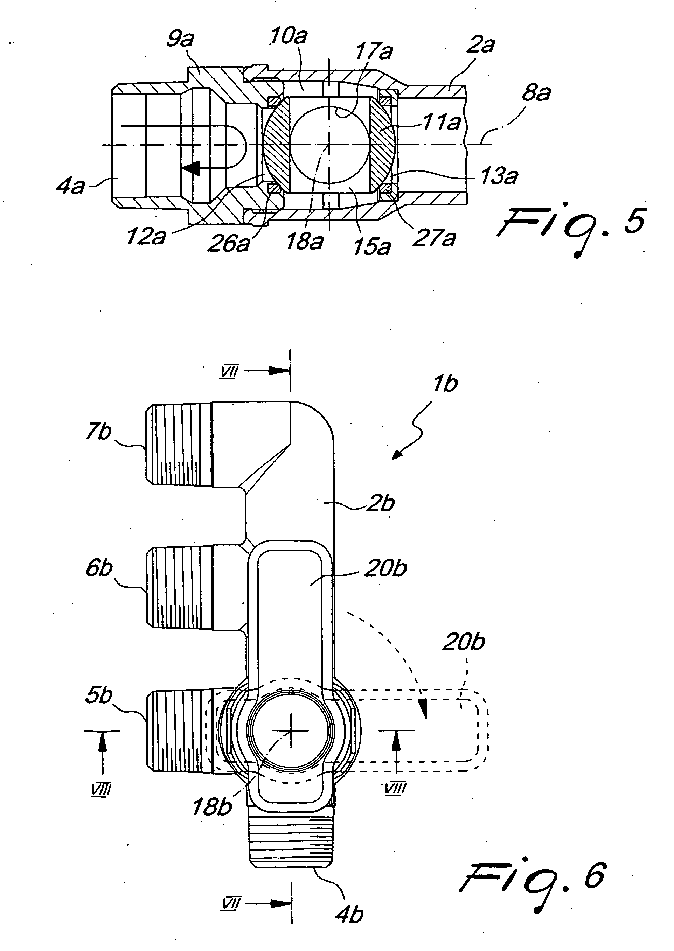

   Figure 6 is a top plan view of the manifold with the flow control element in the open position;

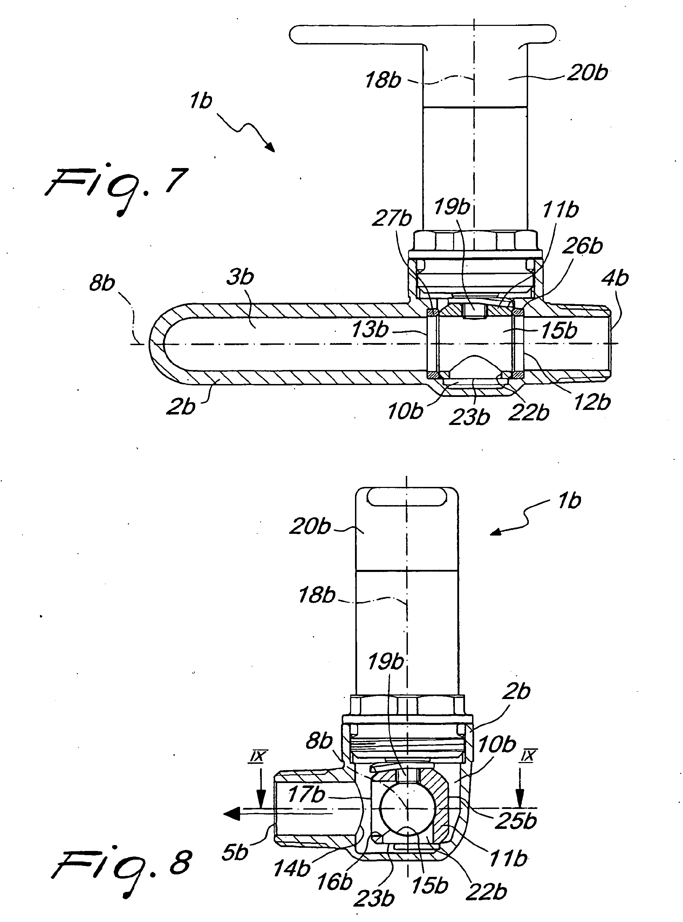

   Figure 7 is a partial sectional view of Figure 6, taken along the line VII-VII;
   Figure 8 is a partial sectional view of Figure 6, taken along the line VIII-VIII;

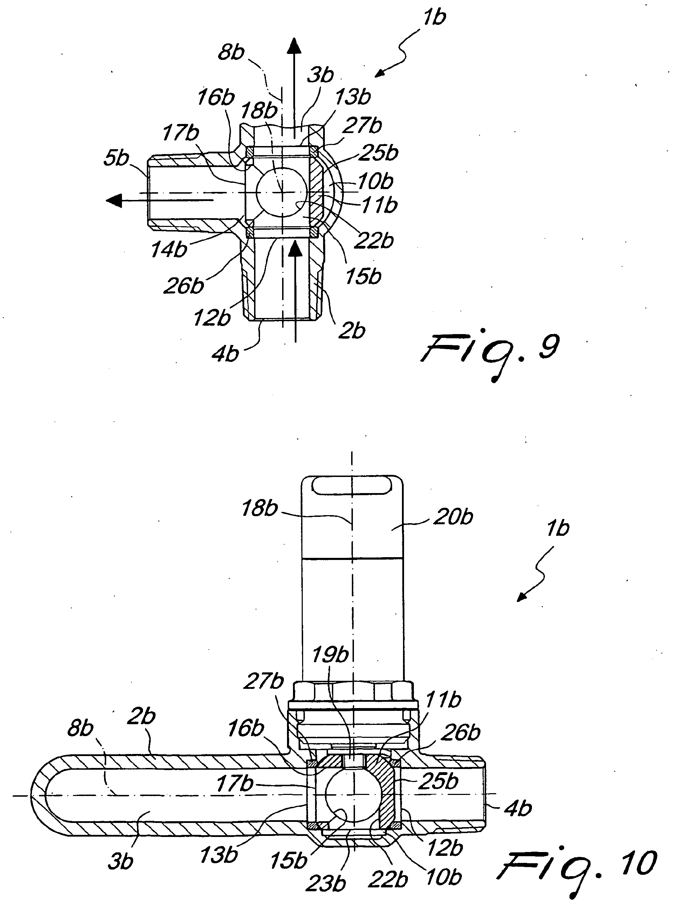

   Figure 9 is a sectional view of a detail of Figure 8, taken along the line IX-IX;
   Figure 10 is a sectional view, similar to Figure 7, but with the flow control element in the closed position;

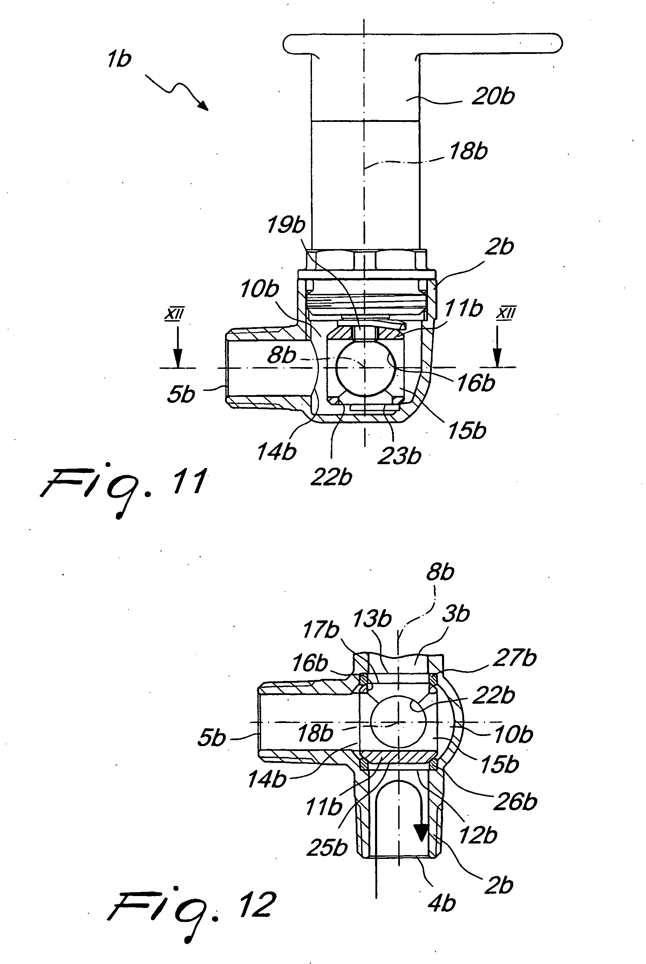

   Figure 11 is a partial sectional view, similar to Figure 8, but with the flow control element in the closed position;
   Figure 12 is a sectional view of a detail of Figure 11, taken along the line XII-XII;

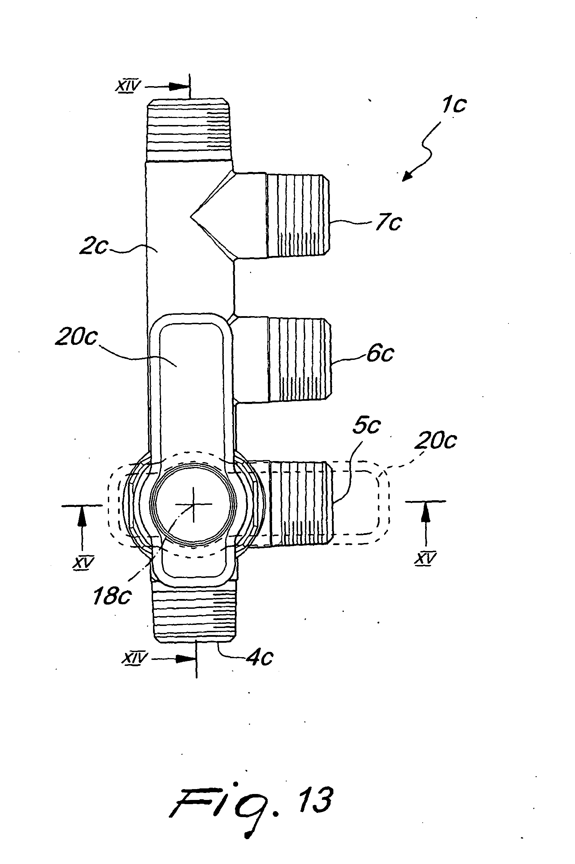

   Figures 13 to 19 are views of the manifold according to the invention in a third embodiment, and more particularly:
   Figure 13 is a top plan view of the manifold with the flow control element in the open position;

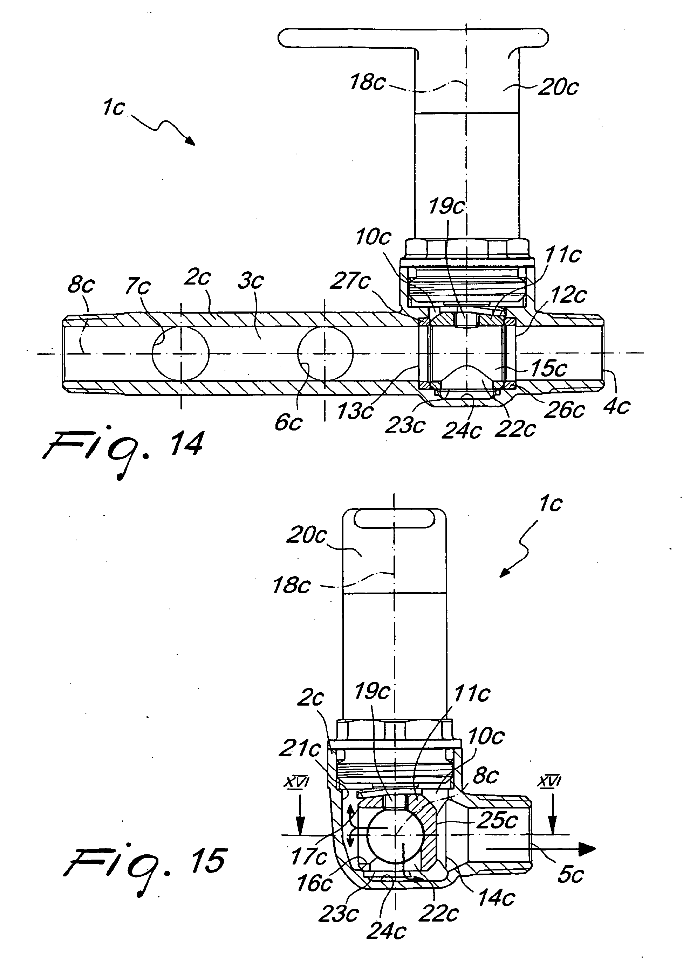

   Figure 14 is a partial sectional view of Figure 13, taken along the line XIV-XIV;
   Figure 15 is a partial sectional view of Figure 13, taken along the line XV-XV;

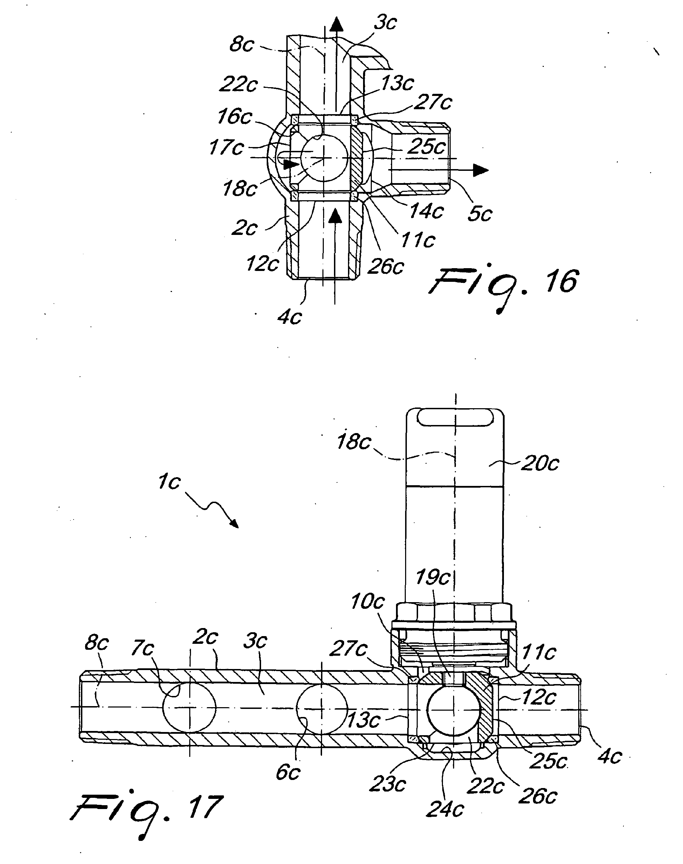

   Figure 16 is a sectional view of a detail of Figure 15, taken along the line XVI-XVI;
   Figure 17 is a sectional view, similar to Figure 14, but with the flow control element in the closed position;

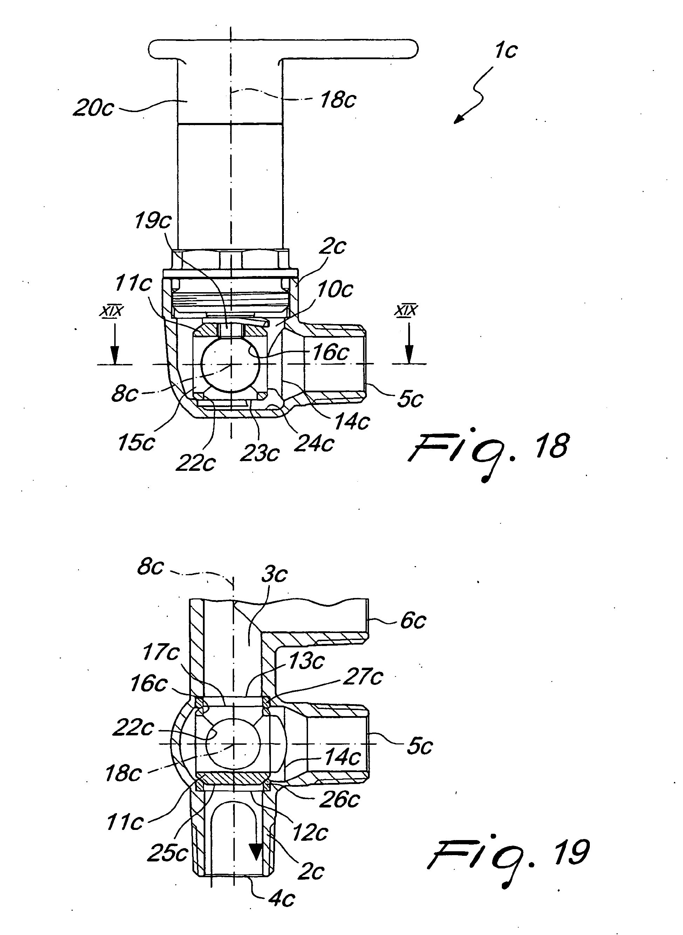

   Figure 18 is a partial sectional view, similar to Figure 15, but with the flow control element in the closed position;
   Figure 19 is a sectional view of a detail of Figure 18, taken along the line XIX-XIX.

With reference to the figures, the manifold according to the invention, designated by the reference numerals 1a, 1b, 1c in the different embodiments, comprises a manifold body 2a, 2b, 2c, which has an elongated shape and in which there lies a duct 3a, 3b, 3c which is connected to an intake port 4a, 4b, 4c, which is provided at a longitudinal end of the manifold body 2a, 2b, 2c and to at least two discharge ports 5a, 5b, 5c, 6a, 6b, 6c and 7a, 7b, 7c, which are spaced one another along the longitudinal extension of the manifold body 2a, 2b, 2c.

Preferably, the manifold body 2a, 2b, 2c has a substantially cylindrical shape and the intake port 4a, 4b, 4c is provided at an axial end of said manifold body 2a, 2b, 2c, while the discharge ports are aligned on the lateral surface of the manifold body 2a, 2b, 2c along a direction which is substantially parallel to the axis 8a, 8b, 8c of the manifold body 2a, 2b, 2c.

The axial end of the manifold body 2a, 2b, 2c at which the intake port 4a, 4b, 4c is provided is designed to be connected to a distribution line for liquids or gases by means of a known type of coupling.

In the first embodiment, such end has an external thread formed by an end element 9a which is connected, by means of a threaded coupling, to the remaining portion of the manifold body 2a.

In the other two embodiments, such end has an external thread provided directly on the manifold body 2b, 2c, which is formed monolithically.

To provide the connection of the end of the manifold at which the intake port 4a, 4b, 4c is formed, it is also possible to use, however, other known types of connections, such as for example compression couplings, welds, or other known types of connection method.

The discharge ports 5a, 5b, 5c, 6a, 6b, 6c, and 7a, 7b, 7c are preferably provided at lateral branches of the manifold body 2a, 2b, 2c which lie substantially at right angles to its axis 8a, 8b, 8c.

In the illustrated embodiments there are three discharge ports 5a, 5b, 5c, 6a, 6b, 6c, and 7a, 7b, 7c, but the number of discharge ports can vary according to the requirements.

According to the invention, in the manifold body 2a, 2b, 2c there is a seat 10a, 10b, 10c, which accommodates a ball-shaped flow control element 11a, 11b, 11c, which is arranged at the first discharge port 5a, 5b, 5c, i.e., at the discharge port, among the discharge ports, that lies closest to the intake port 4a, 4b, 4c. The flow control element 11a, 11b, 11c can be operated in order to pass from a closed position, in which it blocks the duct 3a, 3b, 3c between the intake port 4a, 4b, 4c and the first discharge port 5a, 5b, 5c, to an open position, in which it opens the duct 3a, 3b, 3c, thus connecting the intake port 4a, 4b, 4c to the discharge ports 5a, 5b, 5c, 6a, 6b, 6c, and 7a, 7b, 7c, and vice versa.

More particularly, the seat 10a, 10b, 10c is arranged along the duct 3a, 3b, 3c and has: a first opening 12a, 12b, 12c, which is connected to the portion of the duct 3a, 3b, 3c that extends from the intake port 4a, 4b, 4c to the seat 10a, 10b, 10c; a second opening 13a, 13b, 13c, which is aligned with the first opening and is connected to the portion of the duct 3a, 3b, 3c that extends from the seat 10a, 10b, 10c in the opposite direction with respect to the intake port 4a, 4b, 4c; and a third opening 14a, 14b, 14c, which is arranged so that its axis is perpendicular to the common axis of the first opening 12a, 12b, 12c and of the second opening 13a, 13b, 13c and is connected to the first discharge port 5a, 5b, 5c.

The flow control element 11a, 11b, 11c has a diametrical passage 15a, 15b, 15c and at least one lateral passage 16a, 16b, 16c, which is arranged so that its axis is perpendicular to the axis of the diametrical passage 15a, 15b, 15c. The lateral passage 16a, 16b, 16c is connected to the diametrical passage 15a, 15b, 15c and has an outlet 17a, 17b, 17c which is provided on the lateral surface of the flow control element 11a, 11b, 11c.

The flow control element 11a, 11b, 11c can rotate, with respect to the manifold body 2a, 2b, 2c, about a rotation axis 18a, 18b, 18c which is substantially perpendicular to the axis of the diametrical passage 15a, 15b, 15c, so as to pass from the closed position, in which it engages hermetically, by means of a portion of its lateral surface which is not affected by the passages 15a, 15b, 15c and 16a, 16b, 16c, the first opening 12a, 12b, 12c, to the open position, in which the diametrical passage 15a, 15b, 15c is aligned with the first opening 12a, 12b, 12c and with the second opening 13a, 13b, 13c and the outlet 17a, 17b, 17c is connected to the third opening 14a, 14b, 14c.

The flow control element 11 a, 11b, 11c is connected to an actuation shaft 19a, 19b, 19c, the axis whereof coincides with the rotation axis 18a, 18b, 18c and can rotate, with respect to the manifold body 2a, 2b, 2c, about the rotation axis 18a, 18b, 18c in order to pass from the open position to the closed position along a rotational arc of substantially 90° which, as in known types of flow control valves, is clockwise if viewed from the end of the actuation shaft 19a, 19b, 19c which protrudes from the manifold body 2a, 2b, 2c.

The end of the actuation shaft 19a, 19b, 19c that protrudes from the manifold body 2a, 2b, 2c is connected, in a per se known manner, to an actuation lever or knob 20a, 20b, 20c.

The openings 12a, 12b, 12c and 13a, 13b, 13c are arranged coaxially to the duct 3a, 3b, 3c, while the third opening 14a, 14b, 14c is aligned with the first discharge port 5a, 5b, 5c.

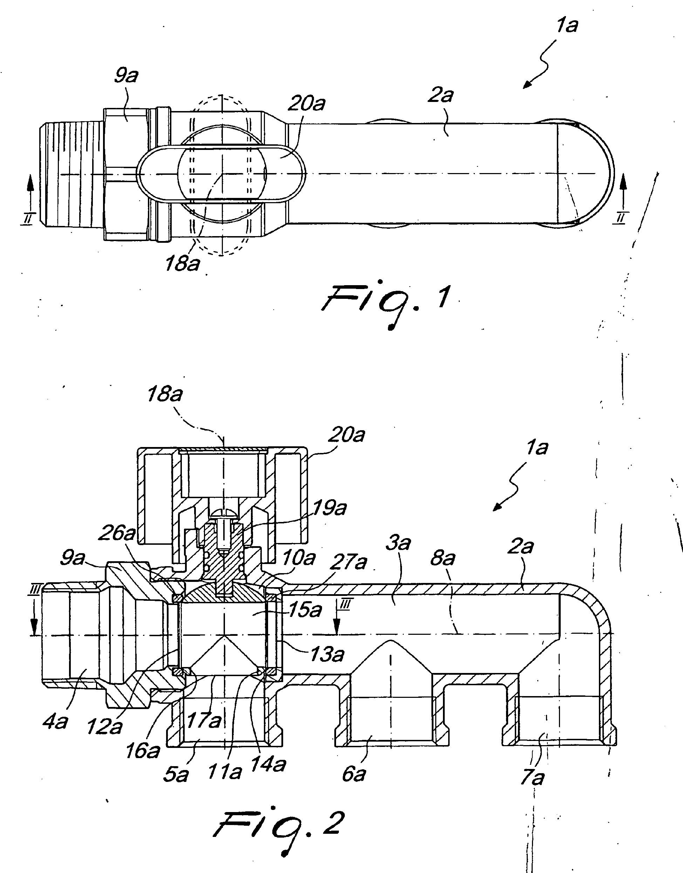

More particularly, in the first embodiment, which refers to a manifold of the external type, the first discharge port 5a is arranged so that its axis is aligned with the rotation axis 18a and is provided on the lateral surface of the manifold body 2a in a region which lies opposite the region from which the actuation shaft 19a protrudes. In this first embodiment, the third opening 14a is arranged coaxially to the outlet 17a of the lateral passage 16a, and their axis coincides with the rotation axis 18a. The outlet 17a of the lateral passage 16a faces constantly, regardless of the position assumed by the flow control element 11 a in its rotation about the rotation axis 18a, the third opening 14a. In this first embodiment, when the flow control element 11 a is in the open position, shown in Figures 1, 2 and 3, the diametrical passage 15a is aligned with the first opening 12a and with the second opening 13a and therefore also with the duct 3a, while the outlet 17a of the lateral passage 16a is aligned with the third opening 14a. In this manner, all the discharge ports 5a, 6a, 7a are connected to the intake port 4a.

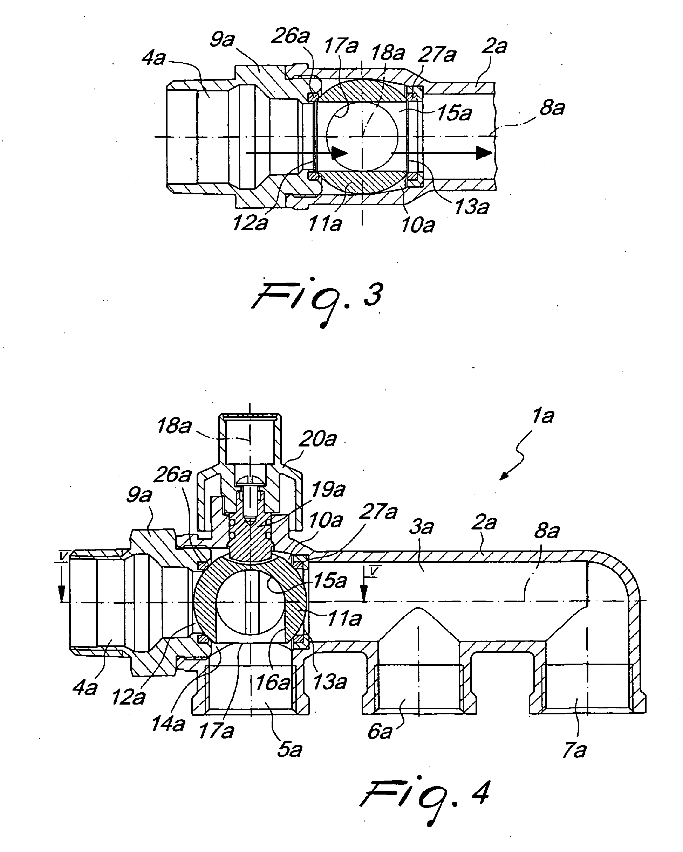

By turning the flow control element 11 a about the rotation axis 18a and by making it turn clockwise through 90°, the diametrical passage 15a is placed so that its axis is perpendicular to the axis 8a of the duct 3a and the flow control element 11 a blocks hermetically the first opening 12a, thus interrupting the connection of the several discharge ports 5a, 6a, 7a to the intake port 4a, as shown in Figures 4 and 5.

In the second and third embodiments, which refer to manifolds for flush mounting, the axis of the third opening 14b, 14c is oriented substantially at right angles to the rotation axis 18b, 18c and to the common axis of the first opening 12b, 12c and of the second opening 13b, 13c and therefore also at right angles to the axis 8c of the duct 3c.

In the second embodiment, the lateral passage 16b, when the flow control element 11b is in the open position, is aligned with the third opening 14b and faces said third opening 14b with its outlet 17b.

In this embodiment also, the diametrical passage 15b, when the flow control element 11b is in the open position, is aligned with the duct 3b and therefore aligned with the first opening 12b and with the second opening 13b.

In this position, the flow control element 11b connects the intake port 4b to the discharge ports 6b, 7b by means of the diametrical passage 15b and to the discharge port 5b by means of the lateral passage 16b, as shown in Figures 6, 7, 8 and 9.

When instead the flow control element 11 b is in the closed position, a portion of its lateral surface which is not occupied by openings of the passages 15b, 16b blocks the first opening 12b, thus interrupting the connection between the intake port 4b and the discharge ports 5b, 6b, 7b, as shown in Figures 10, 11 and 12.

It should be noted that in the closed position the flow control element 11b has the diametrical passage 15b aligned with the third opening 14b and has the lateral passage 16b which faces, with its outlet 17b, the second opening 13b.

In the third embodiment, in which the discharge ports 5c, 6c, 7c have an opposite arrangement with respect to the ports 5b, 6b, 7b in the second embodiment, the outlet 17c of the lateral passage 16c, when the flow control element 11c is in the open position, as shown in Figures 13, 14, 15 and 16, is directed away from the third opening 14c and is connected thereto and to the first discharge port 5c through a channel 21c which is provided in the walls of the duct 3c which delimit the seat 10c.

As an alternative to the lateral passage 16c, or in combination therewith, it is possible to provide an additional lateral passage 22c, which is connected to the diametrical passage 15c and has an outlet 23c which is provided on the lateral surface of the flow control element 11c. The lateral passage 22c is oriented so that its axis is aligned with the rotation axis 18c and its outlet 23c faces a region of the surface which delimits the seat 10c which lies opposite with respect to the region from which the actuation shaft 19c protrudes from the manifold body 2c. In this manner, in any position assumed by the flow control element 11c in its rotation about the axis 18c, the lateral passage 22c constantly faces the region of the walls of the duct 3c which delimit the seat 10c and is connected to the first discharge port 5c through a channel 24c which is provided in the walls of the duct 3c which delimit the seat 10c. In this manner, with the flow control element 11 c in the open position, the intake port 4c is connected to the discharge ports 6c, 7c through the diametrical passage 15c and to the discharge port 5c through the lateral passages 16c and 22c thanks to the presence of the channels 21 c and 24c.

In the closed position, the flow control element 11c blocks, with a portion of its lateral surface which is not affected by any opening, the first opening 12c and thus interrupts the connection of the intake port 4c to the discharge ports 5c, 6c, 7c, as shown in Figures 17, 18 and 19.

In this third embodiment, the portion of the lateral surface of the flow control element 11c which, when the flow control element 11c is in the open position, faces the third opening 14c and therefore the first discharge port 5c, has a recess, which is provided for example by means of a flat portion 25c so as to increase the passage section available for the fluid between the channels 21 c, 24c and the third opening 14c.

In the different illustrated embodiments, at the first opening 12a, 12b, 12c there is a sealing gasket 26a, 26b, 26c, with which the flow control element 11a, 11b, 11c engages at least in the closed position. It is further possible to provide another sealing gasket 27a, 27b, 27c at the second opening 13a, 13b, 13c.

It should be noted that due to production standardization requirements, the flow control element 11b in the second embodiment also can be provided with an additional lateral passage 22b, with an outlet 23b and with a flat portion 25b, thus being identical to the flow control element 11 c in the third embodiment.

In practice it has been found that the manifold according to the invention fully achieves the intended aim, since the integration of the flow control valve in the manifold body and the arrangement of the flow control element of said valve at the first discharge port allows to contain considerably the longitudinal space occupation of the manifold.

Moreover, due to the fact that the flow control valve is integrated in the manifold, installation is extremely simple and quick.

The manifold thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

The disclosures in Italian Patent Application No. MI2006A001416 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A manifold (1a, 1b, 1c,) for liquid or gas distribution systems, comprising a manifold body (2a, 2b, 2c), which has an elongated shape and in which there lies a duct (3a, 3b, 3c) connected to an intake port (4a, 4b, 4c), which is provided at a longitudinal end of the manifold body (2a, 2b, 2c), and to at least two discharge ports (5a, 5b, 5c, 6a, 6b, 6c, 7a, 7b, 7c), which are spaced one another along the longitudinal extension of the manifold body, in said manifold body (2a, 2b, 2c) being defined a seat (10a, 10b, 10c) which accommodates a ball-shaped flow control element (11a, 11b, 11c) which is arranged at the first discharge port (5a, 5b, 5c), i.e., the discharge port that lies closest to said intake port (4a, 4b, 4c), said flow control element (11a, 11b, 11c) being maneuverable in order to pass from a closed position, in which it blocks said duct (3a, 3b, 3c) between said intake port (4a, 4b, 4c) and said first discharge port (5a, 5b, 5c), to an open position, in which it opens said duct (3a, 3b, 3c), connecting said intake port (4a, 4b, 4c) to said discharge ports (5a, 5b, 5c, 6a, 6b, 6c, 7a, 7b, 7c), and vice versa, **characterized in that** said flow control element (11a, 11b, 11c) is connected to an actuation shaft (19a, 19b, 19c), the axis whereof coincides with a rotation axis (18a, 18b, 18c) and protrudes from said manifold body (2a, 2b, 2c), and can rotate, with respect to said manifold body, about said rotation axis (18a, 18b, 18c) in order to pass from said open position to said closed position along a clockwise rotational arc of substantially 90°, when viewed from the end of the actuation shaft that protrudes from the manifold body (2a, 2b, 2c), said manifold body (2a, 2b, 2c) having a substantially cylindrical shape, said intake port (4a, 4b, 4c) being provided at an axial end of the manifold body (2a, 2b, 2c), said discharge ports (5a, 5b, 5c, 6a, 6b, 6c) being provided at lateral branches of the manifold body (2a, 2b, 2c) which lie substantially at right angles to its axis..

2. The manifold according to claim 1, **characterized in that** said seat (10a, 10b, 10c) is arranged along said duct (3a, 3b, 3c) and has: a first opening (12a, 12b, 12c), which is connected to the portion of said duct (3a, 3b, 3c) which runs from said intake port (4a, 4b, 4c) to said seat (10a, 10b, 10c), a second opening (13a, 13b, 13c), which is aligned with said first opening (12a, 12b, 12c) and is connected to the portion of said duct (3a, 3b, 3c) which extends from said seat (10a, 10b, 10c) away from said intake port (4a, 4b, 4c), and a third opening (14a, 14b, 14c), which is arranged so that its axis is perpendicular to the common axis of said first opening (12a, 12b, 12c) and of said second opening (13a, 13b, 13c) and is connected to said first discharge port (5a, 5b, 5c), said flow control element (11a, 11b, 11c) having a diametrical passage (15a, 15b, 15c) and at least one lateral passage (16a, 16b, 16c) which is arranged at right angles to the axis of said diametrical passage (15a, 15b, 15c), said lateral passage (16a, 16b, 16c) being connected to said diametrical passage (15a, 15b, 15c) and having an outlet (17a, 17b, 17c) which is provided on the lateral surface of the flow control element (11a, 11b, 11c), said flow control element being able to rotate about said rotation axis (18a, 18b, 18c) which is substantially perpendicular to the axis of said diametrical passage (15a, 15b, 15c) in order to pass from said closed position, in which it engages hermetically, by means of a portion of its surface which is not affected by said passages (15a, 15b, 15c, 16a, 16b, 16c), said first opening (12a, 12b, 12c), to said open position, in which said diametrical passage (15a, 15b, 15c) is aligned with said first opening (12a, 12b, 12c) and with said second opening (13a, 13b, 13c) and said lateral passage (16a, 16b, 16c) is connected to said third opening (14a, 14b, 14c).

3. The manifold according to one or more of the preceding claims, **characterized in that** said first opening (12a, 12b, 12c) and said second opening (13a, 13b, 13c) are arranged coaxially to said duct (3a, 3b, 3c) and **in that** said third opening (14a, 14b, 14c) is aligned with said first discharge port (5a, 5b, 5c).

4. The manifold according to one or more of the preceding claims, **characterized in that** said third opening (14a) and said lateral passage (16a) of the flow control element (11a) are coaxial to each other and their axis coincides with said rotation axis (18a), said outlet (17a) of said lateral passage (16a) facing said third opening (14a).

5. The manifold according to one or more of the preceding claims, **characterized in that** the axis of said third opening (14b, 14c) is oriented substantially at right angles to said rotation axis 18b, 18c) and to the common axis of said first opening (12b, 12c) and of said second opening (13b, 13c).

6. The manifold according to claim 5, **characterized in that** said lateral passage (16b), when said flow control element (11b) is in said open position, is aligned with said third opening (14b) and faces said third opening (14b) with its outlet (17b).

7. The manifold according to claim 5, **characterized in that** said outlet (17c) of the lateral passage (16c), when said flow control element (11c) is in said open position, is directed away from said third opening (14c) and is connected to said third opening (14c) through a channel (21c) which is provided in the walls of said duct (3c) which delimit said seat (10c).

8. The manifold according to claim 5, **characterized in that** said outlet of the lateral passage, when said flow control element (11c) is in said open position, is directed toward the wall of said manifold body (2c) which lies opposite with respect to the wall from which said actuation shaft protrudes and is connected to said third opening (14c) through a channel (24c) which is provided in the walls of said duct (3c) which delimit said seat (10c).

9. The manifold according to claims 7 and 8, **characterized in that** the side of said flow control element (11c) which faces said third opening (14c) when said flow control element (11c) is in said open position has a recess (25c) which is adapted to increase the passage section between said channel (21 c, 24c), which is provided in the walls of said duct (3c) which delimit said seat (10c), and said third opening (14c).

10. The manifold according to claim 6, **characterized in that** said flow control element has two lateral passages (16c, 22c) which are arranged so that their axes are perpendicular to the axis of said diametrical passage (15c), said lateral passages (16c, 24c) being connected to said diametrical passage (15c) and to a corresponding outlet (23c) which is provided on the lateral surface of the flow control element (11c), said two lateral passages (16c, 22c) being oriented so that their axis is respectively aligned with said rotation axis (18c) and perpendicular to said rotation axis (18c).

11. The manifold according to one or more of the preceding claims, **characterized in that** said discharge ports (5a, 5b, 5c, 6a, 6b, 6c) are aligned on the lateral surface of the manifold body (2a, 2b, 2c) along a direction which is substantially parallel to the axis of the manifold body (2a, 2b, 2c).

12. The manifold according to one or more of the preceding claims, **characterized in that** in said seat 10a, 10b, 10c), at least around said first opening (12a, 12b, 12c), there is a sealing gasket (26a, 26b, 26c) which can be engaged by said flow control element (11a, 11b, 11c) at least in said closed position.

## Patentansprüche

1. Verteiler (1a, 1b, 1c) für Flüssigkeits- oder Gasverteilungssysteme, beinhaltend einen Verteilerkörper (2a, 2b, 2c), der eine gestreckte Form hat und in dem ein Rohr (3a, 3b, 3c) liegt, das mit einer Einlassöffnung (4a, 4b, 4c), die an einem Längsende des Verteilerkörpers (2a, 2b, 2c) vorgesehen ist, und mindestens zwei Auslassöffnungen (5a, 5b, 5c, 6a, 6b, 6c, 7a, 7b, 7c), die voneinander beabstandet entlang der longitudinalen Ausdehnung des Verteilerkörpers angeordnet sind, verbunden ist, wobei in dem Verteilerkörper (2a, 2b, 2c) eine Aufnahme (10a, 10b, 10c) definiert ist, die ein kugelförmiges Flusskontrollelement (11a, 11b, 11c) aufnimmt, das an der ersten Auslassöffnung (5a, 5b, 5c), d.h. an der Auslassöffnung, die am nächsten zur Einlassöffnung (4a, 4b, 4c) liegt, angeordnet ist, wobei das Flusskontrollelement (11a, 11b, 11c) beweglich ist, um von einer geschlossenen Position, in der es das Rohr (3a, 3b, 3c) zwischen der Einlassöffnung (4a, 4b, 4c) und der ersten Auslassöffnung (5a, 5b, 5c) verschließt, in eine offene Position, in der es das Rohr (3a, 3b, 3c) öffnet, überzugehen, wobei es die Einlassöffnung (4a, 4b, 4c) mit den Auslassöffnungen (5a, 5b, 5c, 6a, 6b, 6c, 7a, 7b, 7c) und umgekehrt verbindet, **dadurch gekennzeichnet, dass** das Flusskontrollelement (11 a, 11b, 11c) mit einer Antriebswelle (19a, 19b, 19c) verbunden ist, deren Achse mit einer Rotationsachse (18a, 18b, 18c) zusammenfällt und vom Verteilerkörper (2a, 2b, 2c) hervorsteht, und die sich in Bezug auf den Verteilerkörper um die Rotationsachse (18a, 18b, 18c) drehen kann, um entlang eines Kreisbogens von, von dem vom Verteilerkörper (2a, 2b, 2c) hervorstehenden Ende der Antriebswelle aus gesehen, im Wesentlichen 90° im Uhrzeigersinn, von der offenen Position in die geschlossene Position überzugehen, wobei der Verteilerkörper (2a, 2b, 2c) eine im Wesentlichen zylindrische Form hat, die Einlassöffnung (4a, 4b, 4c) an einem axialen Ende des Verteilerkörpers (2a, 2b, 2c) vorgesehen ist und die Auslassöffnungen (5a, 5b, 5c, 6a, 6b, 6c) an lateralen Schenkeln des Verteilerkörpers (2a, 2b, 2c), die im Wesentlichen in rechten Winkeln zu seiner Achse liegen, vorgesehen sind.

2. Verteiler nach Anspruch 1, **dadurch gekennzeichnet, dass** die Aufnahme (10a, 10b, 10c) entlang des Rohrs (3a, 3b, 3c) angeordnet ist und besitzt: Eine erste Öffnung (12a, 12b, 12c), die mit einem Teil des Rohrs (3a, 3b, 3c), der von der Einlassöffnung (4a, 4b, 4c) zu der Aufnahme (10a, 10b, 10c) verläuft, verbunden ist, eine zweite Öffnung (13a, 13b, 13c), die in Flucht mit der ersten Öffnung (12a, 12b, 12c) und verbunden mit dem Teil des Rohrs (3a, 3b, 3c) ist, der sich von der Aufnahme (10a, 10b, 10c) aus von der Einlassöffnung (4a, 4b, 4c) weg erstreckt, und eine dritte Öffnung (14a, 14b, 14c), die so angeordnet ist, dass ihre Achse senkrecht zu der gemeinsamen Achse der ersten Öffnung (12a, 12b, 12c) und der zweiten Öffnung (13a, 13b, 13c), und mit der ersten Auslassöffnung (5a, 5b, 5c) verbunden ist, wobei das Flusskontrollelement (11a, 11b, 11c) einen diametralen Durchgang (15a, 15b, 15c) und zumindest einen lateralen Durchgang (16a, 16b, 16c), der in rechten Winkeln zu der Achse des diametralen Durchgangs (15a, 15b, 15c) angeordnet ist, wobei der laterale Durchgang (16a, 16b, 16c) mit dem diametralen Durchgang (15a, 15b, 15c) verbunden ist und einen Abfluss (17a, 17b, 17c) aufweist, der an der lateralen Oberfläche des Flusskontrollelements (11a, 11b, 11c) vorgesehen ist, wobei sich das Flusskontrollelement um die Rotationsachse (18a, 18b, 18c), die im Wesentlichen senkrecht zu der Achse des diametralen Durchgangs (15a, 15b, 15c) ist, drehen kann, um von der geschlossenen Position, in der es mittels eines Teils seiner Oberfläche, der nicht von den Durchgängen (15a, 15b, 15c, 16a, 16b, 16c) beeinflusst wird, hermetisch mit der ersten Öffnung (12a, 12b, 12c) abschließt, in die offene Position überzugehen, in der der diametrale Durchgang (15a, 15b, 15c) in Flucht mit der ersten Öffnung (12a, 12b, 12c) und der zweiten Öffnung (13a, 13b, 13c) ist und der laterale Durchgang (16a, 16b, 16c) mit der dritten Öffnung (14a, 14b, 14c) verbunden ist.

3. Verteiler nach einem oder mehreren der vorigen Ansprüche, **dadurch gekennzeichnet, dass** die erste Öffnung (12a, 12b, 12c) und die zweite Öffnung (13a, 13b, 13c) koaxial zu dem Rohr (3a, 3b, 3c) angeordnet ist, und dass die dritte Öffnung (14a, 14b, 14c) in Flucht mit der ersten Auslassöffnung (5a, 5b, 5c) ist.

4. Verteiler nach einem oder mehreren der vorigen Ansprüche, **dadurch gekennzeichnet, dass** die dritte Öffnung (14a) und der laterale Durchgang (16a) des Flusskontrollelements (11a) koaxial zueinander sind und ihre Achse mit der Rotationsachse (18a) zusammenfällt, wobei der Abfluss (17a) des lateralen Durchgangs (16a) zu der dritten Öffnung (14a) hinweist.

5. Verteiler nach einem oder mehreren der vorigen Ansprüche, **dadurch gekennzeichnet, dass** die Achse der dritten Öffnung (14b, 14c) im Wesentlichen in rechten Winkeln zu der Rotationsachse (18b, 18c) und zu der gemeinsamen Achse der ersten Öffnung (12b, 12c) und der zweiten Öffnung (13b, 13c) orientiert ist.

6. Verteiler nach Anspruch 5, **dadurch gekennzeichnet, dass** der laterale Durchgang (16b), wenn das Flusskontrollelement (11b) in der offenen Position ist, in Flucht mit der dritten Öffnung (14b) ist und zur dritten Öffnung (14b) mit ihrem Abfluss (17b) hinweist.

7. Verteiler nach Anspruch 5, **dadurch gekennzeichnet, dass** der Abfluss (17c) des lateralen Durchgangs (16c), wenn das Flusskontrollelement (11c) in seiner offenen Position ist, von der dritten Öffnung (14c) weg gerichtet und durch einen Kanal (21c), der in den Wänden des Rohrs (3c), die die Aufnahme (10c) begrenzen, vorgesehen ist, mit der dritten Öffnung (14c) verbunden ist.

8. Verteiler nach Anspruch 5, **dadurch gekennzeichnet, dass** der Abfluss des lateralen Durchgangs, wenn das Flusskontrollelement (11c) in der offenen Position ist, auf die, bezogen auf die Wand, von der die Antriebswelle hervorsteht, gegenüberliegende Wand des Verteilerkörpers (2c) gerichtet ist, und mit der dritten Öffnung (14c) durch einen Kanal (24c) verbunden ist, der in den Wänden des Rohrs (3c), die die Aufnahme (10c) begrenzen, vorgesehen ist.

9. Verteiler nach den Ansprüchen 7 und 8, **dadurch gekennzeichnet, dass** die Seite des Flusskontrollelements (11c), die der dritten Öffnung (14c) gegenüberliegt, wenn das Flusskontrollelement (11c) in der offenen Position ist, eine Ausnehmung (25c) hat, die darauf ausgelegt ist, den Durchgangsquerschnitt zwischen dem Kanal (21c, 24c), der in den Wänden des Rohrs (3c), die die Aufnahme (10c) begrenzen, vorgesehen ist, und der dritten Öffnung (14c) zu vergrößern.

10. Verteiler nach Anspruch 6, **dadurch gekennzeichnet, dass** das Flusskontrollelement zwei laterale Durchgänge (16c, 22c) aufweist, die so angeordnet sind, dass ihre Achsen senkrecht zu der Achse des diametralen Durchgangs (15c) sind, wobei die lateralen Durchgänge (16c, 24c) mit dem diametralen Durchgang (15c) und einem entsprechenden Abfluss (23c), der an der lateralen Oberfläche des Flusskontrollelements (11c) vorgesehen ist, verbunden sind, wobei zwei laterale Durchgänge (16c, 22c) so orientiert sind, dass ihre Achse in Flucht mit der Rotationsachse (18c) und entsprechend senkrecht zu der Rotationsachse (18c) liegt.

11. Verteiler nach einem oder mehreren der vorstehenden Ansprüche, **dadurch gekennzeichnet, dass** die Auslassöffnungen (5a, 5b, 5c, 6a, 6b, 6c) auf der lateralen Oberfläche des Verteilerkörpers (2a, 2b, 2c) in Flucht entlang einer Richtung, die im Wesentlichen parallel zur Achse des Verteilerkörpers (2a, 2b, 2c) ist, sind.

12. Verteiler nach einem oder mehreren der vorstehenden Ansprüche, **dadurch gekennzeichnet, dass** in der Aufnahme (10a, 10b, 10c) zumindest um die erste Öffnung (12a, 12b, 12c) eine Dichtung (26a, 26b, 26c) vorhanden ist, in die von dem Flusskontrollelement (11a, 11b, 11c) zumindest in der geschlossenen Position eingegriffen werden kann.

## Revendications

1. Collecteur (1a, 1b 1c pour des systèmes de distribution de liquide ou de gaz, comprenant un corps de collecteur (2a, 2b, 2c), qui a une forme allongée et dans lequel est réalisé un conduit (3a, 3b, 3c) raccordé à un orifice d'admission (4a, 4b, 4c) qui est prévu à une extrémité longitudinale du corps de collecteur (2a, 2b, 2c) et à au moins deux orifices de décharge (5a, 5b, 5c, 6a, 6b, 6c, 7a, 7b, 7c) qui sont espacés l'un de l'autre le long de l'extension longitudinale du corps de collecteur, dans ledit corps de collecteur (2a, 2b, 2c), est défini un siège (10a, 10b, 10c) qui loge un élément de régulation de flux en forme de bille (11a 11b, 11c) qui est agencé dans le premier orifice de décharge (5a, 5b, 5c), c'est-à-dire l'orifice de décharge qui est le plus près dudit orifice d'admission (4a, 4b, 4c), ledit élément de régulation de flux (11a, 11b, 11c) pouvant être manoeuvré afin de passer d'une position fermée dans laquelle il bloque ledit conduit (3a, 3b, 3c) entre ledit orifice d'admission (4a, 4b, 4c) et ledit premier orifice de décharge (5a, 5b, 5c), à une position ouverte dans laquelle il ouvre ledit conduit (3a, 3b, 3c) raccordant ledit orifice d'admission (4a, 4b, 4c) auxdits orifices de décharge (5a, 5b, 5c, 6a, 6b, 6c, 7a, 7b, 7c) et vice versa, **caractérisé en ce que** ledit élément de régulation de flux (11a, 11b, 11c) est raccordé à un arbre d'actionnement (19a, 19b, 19c), dont l'axe coïncide avec un axe de rotation (18a, 18b, 18c) et fait saillie dudit corps de collecteur (2a, 2b, 2c) et peut tourner, par rapport audit corps de collecteur, autour dudit axe de rotation (18a, 18b, 18c) afin de passer de ladite position ouverte à ladite position fermée le long d'un arc de rotation dans le sens des aiguilles d'une montre sensiblement de 90°, lorsqu'il est observé depuis l'extrémité de l'arbre d'actionnement qui fait saillie du corps de collecteur (2a, 2b, 2c), ledit corps de collecteur (2a, 2b, 2c) ayant une forme sensiblement cylindrique, ledit orifice d'admission (4a, 4b, 4c) étant prévu à une extrémité axiale dudit corps de collecteur (2a, 2b, 2c), lesdits orifices de décharge (5a, 5b, 5c, 6a, 6b, 6c) étant prévus dans des ramifications latérales du corps de collecteur (2a, 2b, 2c) qui sont positionnées sensiblement à angle droit par rapport à son axe.

2. Collecteur selon la revendication 1, **caractérisé en ce que** ledit siège (10a, 10b, 10c) est agencé le long dudit conduit (3a, 3b, 3c) et a une première ouverture (12a, 12b, 12c) qui est raccordée à la partie dudit conduit (3a, 3b, 3c) qui s'étend dudit orifice d'admission (4a, 4b, 4c) jusqu'audit siège (10a, 10b, 10c), une deuxième ouverture (13a, 13b, 13c) qui est alignée avec ladite première ouverture (12a, 12b, 12c) et est raccordée à la partie dudit conduit (3a, 3b, 3c) qui s'étend à partir dudit siège (10a, 10b, 10c) à distance dudit orifice d'admission (4a, 4b, 4c) et une troisième ouverture (14a, 14b, 14c) qui est agencée de sorte que son axe est perpendiculaire à l'axe commun de ladite première ouverture (12a, 12b, 12c) et de ladite deuxième ouverture (13a, 13b, 13c) et est raccordée audit premier orifice de décharge (5a, 5b, 5c), ledit élément de régulation de flux (11a, 11b, 11c) ayant un passage diamétral (15a, 15b, 15c) et au moins un passage latéral (16a, 16b, 16c) qui est agencé à angle droit par rapport à l'axe dudit passage diamétral (15a, 15b, 15c), ledit passage latéral (16a, 16b, 16c) étant raccordé audit passage diamétral (15a, 15b, 15c) et ayant une sortie (17a, 17b, 17c) qui est prévue sur la surface latérale de l'élément de régulation de flux (11a, 11b, 11c), ledit élément de régulation de flux pouvant tourner autour dudit axe de rotation (18a, 18b, 18c), qui est sensiblement perpendiculaire à l'axe dudit passage diamétral (15a, 15b, 15c) afin de passer de ladite position fermée dans laquelle il vient en engagement hermétiquement, au moyen d'une partie de sa surface qui n'est pas affectée par lesdits passages (15a, 15b, 15c, 16a, 16b, 16c), avec ladite première ouverture (12a, 12b, 12c), à ladite position ouverte dans laquelle ledit passage diamétral (15a, 15b, 15c) est aligné avec ladite première ouverture (12a, 12b, 12c) et avec ladite deuxième ouverture (13a, 13b, 13c) et ledit passage latéral (16a, 16b, 16c) est raccordé à ladite troisième ouverture (14a, 14b, 14c).

3. Collecteur selon une ou plusieurs des revendications précédente, **caractérisé en ce que** ladite première ouverture (12a, 12b, 12c) et ladite deuxième ouverture (13a, 13b, 13c) sont agencées de manière coaxiale par rapport audit conduit (3a, 3b, 3c) et **en ce que** ladite troisième ouverture (14a, 14b, 14c) est alignée avec ledit premier orifice de décharge (5a, 5b, 5c).

4. Collecteur selon une ou plusieurs des revendications précédentes, **caractérisé en ce que** ladite troisième ouverture (14a) et ledit passage latéral (16a) de l'élément de régulation de flux (11a) sont coaxiaux l'un par rapport à l'autre et leur axe coïncide avec ledit axe de rotation (18a), ladite sortie (17a) dudit passage latéral (16a) faisant face à ladite troisième ouverture (14a).

5. Collecteur selon une ou plusieurs des revendications précédentes, **caractérisé en ce que** l'axe de ladite troisième ouverture (14b, 14c) est orienté sensiblement angle droit par rapport audit axe de rotation (18b, 18c) et par rapport à l'axe commun de ladite première ouverture (12b, 12c) et de ladite deuxième ouverture (13b, 13c).

6. Collecteur selon la revendication 5, **caractérisé en ce que** ledit passage latéral (16b), lorsque ledit élément de régulation de flux (11b) est dans ladite position ouverte, est aligné avec ladite troisième ouverture (14b) et fait face à ladite troisième ouverture (14b) avec sa sortie (17b),

7. Collecteur selon la revendication 5, **caractérisé en ce que** ladite sortie (17c) du passage latéral (16c), lorsque ledit élément de régulation de flux (11c) est dans ladite position ouverte, est dirigée à distance de ladite troisième ouverture (14c) et est raccordée à ladite troisième ouverture (14c) par le biais d'un canal (21c) qui est prévu dans les parois dudit conduit (3c) qui délimitent ledit siège (10c).

8. Collecteur selon la revendication 5, **caractérisé en ce que** ladite sortie du passage latéral, lorsque ledit élément de régulation de flux (11c) est dans ladite position ouverte, est dirigée vers la paroi dudit corps de collecteur (2c) qui se trouve à l'opposé par rapport à la paroi à partir de laquelle ledit arbre d'actionnement fait saillie et est raccordée à ladite troisième ouverture (14c) par le biais d'un canal (24c) qui est prévu dans les parois dudit conduit (3c) qui délimitent ledit siège (10c).

9. Collecteur selon les revendications 7 et 8, **caractérisé en ce que** le côté dudit élément de régulation de flux (11c) qui fait face à ladite troisième ouverture (14c) lorsque ledit élément de régulation de flux (11c) est dans ladite position ouverte, a un évidement (25c) qui est adapté pour augmenter la section de passage entre ledit canal (21c, 24c) qui est prévu dans les parois dudit conduit (3c) qui délimitent ledit siège (10c) et ladite troisième ouverture (14c).

10. Collecteur selon la revendication 6, **caractérisé en ce que** ledit élément de régulation de flux a deux passages latéraux (16c, 22c) qui sont agencés de sorte que leurs axes sont perpendiculaires à l'axe dudit passage diamétral (15c), lesdits passages latéraux (16c, 24c) étant raccordés audit passage diamétral (15c) et à une sortie (23c) correspondante qui est prévue sur la surface latérale de l'élément de contrôle de flux (11c), lesdits deux passages latéraux (16c, 22c) étant orientés de sorte que leur axe est respectivement aligné avec ledit axe de rotation (18c) et perpendiculaire audit axe de rotation (18c).

11. Collecteur selon une ou plusieurs des revendications précédentes, **caractérisé en ce que** lesdits orifices de décharge (5a, 5b, 5c, 6a, 6b, 6c) sont alignés sur la surface latérale du corps de collecteur (2a, 2b, 2c) le long d'une direction qui est sensiblement parallèle à l'axe du corps de collecteur (2a, 2b, 2c).

12. Collecteur selon une ou plusieurs des revendications précédentes, **caractérisé en ce que**, dans ledit siège (10a, 10b, 10c), au moins autour de ladite première ouverture (12a, 12b, 12c), est prévu un joint d'étanchéité (26a, 26b, 26c) avec lequel peut venir en engagement ledit élément de régulation de flux (11a, 11b, 11c) au moins dans ladite position fermée.
